# EUROPÄISCHE PATENTSCHRIFT

(11) **EP 2 187 978 B1**
(45) Veröffentlichungstag und Bekanntmachung des Hinweises auf die Patenterteilung: **02.03.2011**
(21) Anmeldenummer: 08803174.5
(22) Anmeldetag: 25.08.2008
(51) Int. Cl.: A61L 15/22, A61L 15/60, C08F 2/10, C08F 2/34, C08F 20/04, C08J 3/24, C08F 220/06

(54) **VERFAHREN ZUR HERSTELLUNG WASSERABSORBIERENDER POLYMERPARTIKEL DURCH POLYMERISATION VON TROPFEN EINER MONOMERLÖSUNG**
METHOD FOR THE PRODUCTION OF WATER-ABSORBING POLYMER PARTICLES BY POLYMERIZING DROPS OF A MONOMER SOLUTION
PROCÉDÉ DE FABRICATION DE PARTICULES POLYMÈRES ABSORBANT L'EAU, PAR POLYMÉRISATION DE GOUTTES D'UNE SOLUTION MONOMÈRE

(30) Priorität: 30.08.2007 EP 07115291
(43) Veröffentlichungstag der Anmeldung: 26.05.2010
(73) Patentinhaber: BASF SE, 67056 Ludwigshafen (DE)
(72) Erfinder: LÖSCH, Dennis, 67122 Altrip (DE); KRÜGER, Marco, 68161 Mannheim (DE); STUEVEN, Uwe, 65812 Bad Soden (DE); HEIDE, Wilfried, 67251 Freinsheim (DE); WEISMANTEL, Matthias, 63637 Jossgrund (DE); BLEI, Stefan, 68163 Mannheim (DE)
(86) Internationale Anmeldenummer: PCT/EP2008/061054
(87) Internationale Veröffentlichungsnummer: WO 2009/027356

(56) Entgegenhaltungen:
- WO-A-2007/093531
- WO-A-2008/040715

## Beschreibung

Die vorliegende Erfindung betrifft ein Verfahren zur Herstellung wasserabsorbierender Polymerpartikel durch Polymerisation von Tropfen einer Monomerlösung in einer umgebenden Gasphase, wobei die Monomerlösung mindestens 0,0002 Gew.-% Sauerstoff enthält und der Sauerstoffgehalt der Gasphase mindestens 0,5 Vol.-% beträgt.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Durch Sprühpolymerisation konnten die Verfahrensschritte Polymerisation und Trocknung zusammengefasst werden. Zusätzlich konnte die Partikelgröße durch geeignete Verfahrensführung in gewissen Grenzen eingestellt werden.

Die Herstellung wasserabsorbierender Polymerpartikel durch Polymerisation von Tropfen einer Monomerlösung wird beispielsweise in EP 348 180 A1, EP 816 383 A1, WO 96/40427 A1, US 4,020,256, US 200210193546, DE 35 19 013 A1, und DE 10 2005 044 035 A1 sowie der WO 2007/093531 A1 beschrieben.

DE 10 2005 044 035 A1 beschreibt ein Sprühpolymerisationsverfahren mit einer speziellen Vorrichtung zur Tropfenerzeugung. Gemäß der offenbarten technischen Lehre ist Sauerstoff sowohl in der Monomerlösung als auch in der Gasphase zu vermeiden.

Die WO 2007/093531 A1 beschreibt ein Sprühpolymerisationsverfahren mit definiertem Sauerstoffgehalt der Gasphase.

Aufgabe der vorliegenden Erfindung war die Bereitstellung eines verbesserten Verfahrens zur Herstellung wasserabsorbierender Polymerpartikel durch Polymerisation von Tropfen einer Monomerlösung in einer die Tropfen umgebenden Gasphase.

Insbesondere war es eine Aufgabe der vorliegenden Erfindung ein Verfahren bereitzustellen, das wasserabsorbierende Polymerpartikel mit hoher Ausbeute erzeugt und wenig störanfällig ist.

Gelöst wurde die Aufgabe durch ein Verfahren zur Herstellung wasserabsorbierender Polymerpartikel durch Polymerisation von Tropfen einer Monomerlösung, enthaltend
a) mindestens ein ethylenisch ungesättigtes Monomer,
b) wahlweise einen Vernetzer,
c) mindestens einen Initiator und
d) Wasser,

in einer umgebenden Gasphase, dadurch gekennzeichnet, dass die Monomerlösung mindestens 0,0002 Gew.-% Sauerstoff enthält und der Sauerstoffgehalt der Gasphase mindestens 0,5 Vol.-% beträgt.

Der Sauerstoffgehalt der Monomerlösung beträgt vorzugsweise von 0,0002 bis 0,003 Gew.-%, besonders bevorzugt von 0,0003 bis 0,002 Gew.-%, ganz besonders bevorzugt von 0,0004 bis 0,001 Gew.-%. Auf die übliche Inertisierung der Monomerlösung kann daher weitgehend verzichtet werden.

Der erhöhte Sauerstoffgehalt stabilisiert die Monomerlösung und ermöglicht die Verwendung geringerer Mengen an Polymerisationsinhibitor und vermindert damit die durch den Polymerisationsinhibitor verursachten Produktverfärbungen.

Zu niedrige Sauerstoffkonzentrationen führen zu unerwünschter Polymerisation in der Vertropfungsvorrichtung und damit zu Produktionsausfällen. Durch zu hohe Sauerstoffkonzentrationen wird die Polymerisationskinetik ungünstig beeinflusst.

Weiterhin wurde gefunden, dass bei höherem Sauerstoffgehalt in der Gasphase weniger Wandbeläge entstehen und damit die Ausbeute steigt.

Der Sauerstoffgehalt der Gasphase beträgt vorzugsweise von 0,5 bis 15 Vol.-%, besonders bevorzugt von 1 bis 10 Vol.-%, ganz besonders bevorzugt von 2 bis 5 Vol.-%.

Die Gasphase enthält neben Sauerstoff vorzugsweise Stickstoff. Der Stickstoffgehalt der Gasphase beträgt vorzugsweise mindestens 80 Vol.-%, besonders bevorzugt mindesten 90 Vol.-%, ganz besonders bevorzugt mindestens 95 Vol.-%.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser, und haben vorzugsweise mindestens je eine Säuregruppe.

Geeignete Monomere a) sind beispielsweise ethylenisch ungesättigte Carbonsäuren, wie Acrylsäure, Methacrylsäure, Maleinsäure, Fumarsäure und Itaconsäure. Besonders bevorzugte Monomere sind Acrylsäure und Methacrylsäure. Ganz besonders bevorzugt ist Acrylsäure.

Die bevorzugten Monomere a) haben mindestens eine Säuregruppe, wobei die Säuregruppen vorzugsweise zumindest teilweise neutralisiert sind.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Säuregruppen der Monomere a) sind üblicherweise teilweise neutralisiert, vorzugsweise zu 25 bis 85 mol-%, bevorzugt zu 50 bis 80 mol-%, besonders bevorzugt 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung, als Schmelze, oder bevorzugt auch als Feststoff erreicht. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ).

Die Monomerlösung enthält vorzugsweise höchstens 160 Gew.-ppm, bevorzugt höchstens 130 Gew.-ppm, besonders bevorzugt höchstens 70 Gew.-ppm, bevorzugt mindesten 10 Gew.-ppm, besonders bevorzugt mindestens 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Die Polymerisationsinhibitoren können aber auch durch Absorption, beispielsweise an Aktivkohle, aus der Monomerlösung entfernt werden.

Vernetzer b) sind Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP 530 438 A1 beschrieben, Di- und Triacrylate, wie in EP 547 847 A1, EP 559 476 A1, EP 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/32962 A2 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP 343 427 A2 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer b) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins.

Die Monomerlösung enthält vorzugsweise mindestens 0,01 Gew.-%, bevorzugt mindestens 0,02 Gew.-%, besonders bevorzugt mindestens 0,05 Gew.-%, ganz besonders bevorzugt mindestens 0,1 Gew.-%, Vernetzer b), jeweils bezogen auf Monomer a).

Als Initiatoren c) können sämtliche unter den Polymerisationsbedingungen in Radikale zerfallende Verbindungen eingesetzt werden, beispielsweise Peroxide, Hydroperoxide, Wasserstoffperoxid, Persulfate, Azoverbindungen und die sogenannten Redoxinitiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Besonders bevorzugte Initiatoren c) sind Azoinitiatoren, wie 2,2'-Azobis[2-(2-imidazolin-2-yl)propan]dihydrochlorid und 2,2'-Azobis[2-(5-methyl-2-imidazolin-2-yl)propan]dihydrochlorid, und Photoinitiatoren, wie 2-Hydroxy-2-methylpropiophenon und 1-[4-(2-Hydroxyethoxy)-phenyl]-2-hydroxy-2-methyl-1-propan-1-on, Redoxinitiatoren, wie Natriumpersulfat/ Hydroxymethylsulfinsäure, Ammoniumperoxodisulfat/Hydroxymethylsulfinsäure, Wasserstoffperoxid/Hydroxymethylsulfinsäure, Natriumpersulfat/Ascorbinsäure, Ammoniumperoxodisulfat/Ascorbinsäure und Wasserstoffperoxid/Ascorbinsäure, Photoinitiatoren, wie 1-[4-(2-Hydroxyethoxy)-phenyl]-2-hydroxy-2-methyl-1-propan-1-on, sowie deren Mischungen.

Die Initiatoren werden in üblichen Mengen eingesetzt, beispielsweise in Mengen von 0,001 bis 5 Gew.-%, vorzugsweise 0,01 bis 2 Gew.-%, bezogen auf die Monomeren a).

Der Feststoffgehalt der Monomerlösung beträgt vorzugsweise mindestens 35 Gew.-%, bevorzugt mindestens 38 Gew.-%, besonders bevorzugt mindestens 40 Gew.-%, ganz besonders bevorzugt mindestens 42 Gew.-%. Dabei ist der Feststoffgehalt die Summe aller nach der Polymerisation nichtflüchtigen Bestandteile. Dies sind Monomer a), Vernetzer b) und Initiator c).

Die Monomerlösung wird unter Ausbildung von Tropfen in die Gasphase dosiert. Die Tropfen können beispielsweise mittels einer Vertropferplatte erzeugt werden.

Eine Vertropferplatte ist eine Platte mit mindestens einer Bohrung, wobei die Flüssigkeit von oben durch die Bohrung tritt. Die Vertropferplatte bzw. die Flüssigkeit kann in Schwingungen versetzt werden, wodurch an der Unterseite der Vertropferplatte je Bohrung eine idealerweise monodisperse Tropfenkette erzeugt wird. In einer bevorzugten Ausführungsform wird die Vertropferplatte nicht angeregt.

Die Anzahl und die Größe der Bohrungen werden gemäß der gewünschten Kapazität und Tropfengröße ausgewählt. Der Tropfendurchmesser beträgt dabei üblicherweise das 1,9-fache des Durchmessers der Bohrung. Wichtig ist hierbei, dass die zu vertropfende Flüssigkeit nicht zu schnell durch die Bohrung tritt bzw. der Druckverlust über die Bohrung nicht zu groß ist. Ansonsten wird die Flüssigkeit nicht vertropft, sondern der Flüssigkeitsstrahl wird infolge der hohen kinetischen Energie zerrissen (versprüht). Die Reynoldszahl bezogen auf den Durchsatz pro Bohrung und den Bohrungsdurchmesser ist vorzugsweise kleiner als 2.000, bevorzugt kleiner 1.000, besonders bevorzugt kleiner 500, ganz besonders bevorzugt kleiner 250.

Die Vertropferplatte weist üblicherweise mindestens eine, vorzugsweise mindestens 10, besonders bevorzugt mindestens 50, und üblicherweise bis zu 10.000, vorzugsweise bis zu 5.000, besonders bevorzugt bis zu 1.000, Bohrungen auf, wobei die Bohrungen üblicherweise gleichmäßig über die Vertropferplatte verteilt sind, vorzugsweise in der sogenannten Dreiecksteilung, d.h. jeweils drei Bohrungen bilden die Ecken eines gleichseitigen Dreiecks. Der Durchmesser der Bohrungen wird an die gewünschte Tropfengröße angepasst.

Die Tropfen können aber auch mittels pneumatischer Ziehdüsen, Rotation, Zerschneiden eines Strahls oder schnell ansteuerbarer Mikroventildüsen erzeugt werden.

In einer pneumatischen Ziehdüse wird ein Flüssigkeitsstrahl zusammen mit einem Gasstrom durch eine Blende beschleunigt. Über die Gasmenge kann der Durchmesser des Flüssigkeitsstrahls und damit der Tropfendurchmesser beeinflusst werden.

Bei der Tropfenerzeugung durch Rotation tritt die Flüssigkeit durch die Öffnungen einer rotierenden Scheibe. Durch die auf die Flüssigkeit wirkende Fliehkraft werden Tropfen definierter Größe abgerissen. Bevorzugte Vorrichtungen zur Rotationsvertropfung werden beispielsweise in DE 43 08 842 A1 beschrieben.

Der austretende Flüssigkeitsstrahl kann aber auch mittels eines rotierenden Messers in definierte Segmente zerschnitten werden. Jedes Segment bildet anschließend einen Tropfen.

Bei Verwendung von Mikroventildüsen werden direkt Tropfen mit definiertem Flüssigkeitsvolumen erzeugt.

Die erzeugten Tropfen weisen einen mittleren Durchmesser von vorzugsweise mindestens 200 µm, besonders bevorzugt von mindestens 250 µm, ganz besonders bevorzugt von mindestens 300 µm, auf, wobei der Tropfendurchmesser durch Lichtstreuung bestimmt werden kann und den volumengemittelten mittleren Durchmesser bedeutet. Der Polymerisationsreaktor wird von einem Gas durchströmt. Dabei kann das Trägergas im Gleichstrom oder im Gegenstrom zu den frei fallenden Tropfen der Monomerlösung durch den Reaktionsraum geführt werden, bevorzugt im Gleichstrom, d.h. von unten nach oben. Vorzugsweise wird das Gas nach einem Durchgang zumindest teilweise, bevorzugt zu mindestens 50%, besonders bevorzugt zu mindestens 75%, als Kreisgas in den Reaktionsraum zurückgeführt. Üblicherweise wird eine Teilmenge des Trägergases nach jedem Durchgang ausgeschleust, vorzugsweise bis zu 10%, besonders bevorzugt bis zu 3%, ganz besonders bevorzugt bis zu 1 %.

Die Gasgeschwindigkeit wird vorzugsweise so eingestellt, dass die Strömung im Polymerisationsreaktor gerichtet ist, beispielsweise liegen keine der allgemeinen Strömungsrichtung entgegengesetzte Konvektionswirbel vor, und beträgt beispielsweise 0,01 bis 5 m/s, vorzugsweise 0,02 bis 4 m/s, besonders bevorzugt 0,05 bis 3 m/s, ganz besonders bevorzugt 0,1 bis 2 m/s.

Das den Reaktor durchströmende Gas wird zweckmäßigerweise vor dem Reaktor auf die Reaktionstemperatur vorgewärmt.

Die Gaseingangstemperatur, d.h. die Temperatur mit der das Gas in den Reaktionsraum eintritt, beträgt vorzugsweise von 160 bis 250°C, besonders bevorzugt von 180 bis 230°C, ganz besonders bevorzugt von 190 bis 220°C.

Vorteilhaft wird die Gaseintrittstemperatur so geregelt, dass die Gasaustrittstemperatur, d.h. die Temperatur mit der das Gas den Reaktionsraum verlässt von 100 bis 180°C, besonders bevorzugt von 110 bis 160°C, ganz besonders bevorzugt von 120 bis 140°C, beträgt.

Die Reaktion kann im Überdruck oder im Unterdruck durchgeführt werden, ein Unterdruck von bis zu 100 mbar gegenüber dem Umgebungsdruck ist bevorzugt.

Das Reaktionsabgas, d.h. das den Reaktionsraum verlassende Gas, kann beispielsweise in einem Wärmeaustauscher abgekühlt werden. Dabei kondensieren Wasser und nicht umgesetztes Monomer a). Danach kann das Reaktionsabgas zumindest teilweise wieder aufgewärmt und als Kreisgas in den Reaktor zurückgeführt werden. Ein Teil des Reaktionsabgases kann ausgeschleust und durch frisches Gas ersetzt werden, wobei im Reaktionsabgas enthaltenes Wasser und nicht umgesetzte Monomere a) abgetrennt und rückgeführt werden können.

Besonders bevorzugt ist ein Wärmeverbund, dass heißt, ein Teil der Abwärme beim Abkühlen des Abgases wird zum Aufwärmen des Kreisgases verwendet.

Die Reaktoren können begleitbeheizt werden. Die Begleitheizung wird dabei so eingestellt, dass die Wandtemperatur mindestens 5°C oberhalb der Reaktorinnentemperatur liegt und die Kondensation an den Reaktorwänden zuverlässig vermieden wird.

Die Polymerpartikel können zur weiteren Verbesserung der Eigenschaften nachvernetzt werden.

Nachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyepoxide, wie in EP 83 022 A2, EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder β-Hydroxyalkylamide, wie in DE 102 04 938 A1 und US 6,239,230 beschrieben.

Des Weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/31482 A1 Morpholin-2,3-dion und dessen Derivate als geeignete Nachvernetzer beschrieben.

Die Menge an Nachvernetzer beträgt vorzugsweise 0,01 bis 1 Gew.-%, besonders bevorzugt 0,05 bis 0,5 Gew.-%, ganz besonders bevorzugt 0,1 bis 0,2 Gew.-%, jeweils bezogen auf das Polymer.

Die Nachvernetzung wird üblicherweise so durchgeführt, dass eine Lösung des Nachvernetzers auf das Hydrogel oder die trockenen Polymerpartikel aufgesprüht wird. Im Anschluss an das Aufsprühen wird thermisch getrocknet, wobei die Nachvernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige-Mischer, Bepex-Mischer, Nauta-Mischer, Processall-Mischer und Schugi-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 170 bis 250°C, bevorzugt 180 bis 220°C, und besonders bevorzugt 190 bis 210°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten.

Die gemäß dem erfindungsgemäßen Verfahren erhältlichen wasserabsorbierenden Polymerpartikel weisen eine Zentrifugenretentionskapazität (CRC) von typischerweise mindestens 15 g/g, vorzugsweise mindestens 20 g/g, bevorzugt mindestens 25 g/g, besonders bevorzugt mindestens 30 g/g, ganz besonders bevorzugt mindestens 35 g/g, auf. Die Zentrifugenretentionskapazität (CRC) der wasserabsorbierenden Polymerpartikel beträgt üblicherweise weniger als 100 g/g. Die Zentrifugenretentionskapazität der wasserabsorbierenden Polymerpartikel wird gemäß der von der EDANA (European Disposables and Nonwovens Association) empfohlenen Testmethode Nr. 441.2-05 "Centrifuge retention capacity" bestimmt.

Der mittlere Durchmesser der gemäß dem erfindungsgemäßen. Verfahren erhältlichen wasserabsorbierenden Polymerpartikel beträgt vorzugsweise mindestens 200 µm, besonders bevorzugt von 250 bis 600 µm, ganz besonders von 300 bis 500 µm, wobei der Partikeldurchmesser durch Lichtstreuung bestimmt werden kann und den volumengemittelten mittleren Durchmesser bedeutet. 90% der Polymerpartikel weisen einen Durchmesser von vorzugsweise 100 bis 800 µm, besonders bevorzugt von 150 bis 700 µm, ganz besonders bevorzugt von 200 bis 600 µm, auf.

Ein weiterer Gegenstand der vorliegenden Erfindung sind gemäß dem erfindungsgemäßen Verfahren erhältliche wasserabsorbierende Polymerpartikel.

Die wasserabsorbierenden Polymerpartikel werden mittels der nachfolgend beschriebenen Testmethoden geprüft.

### Methoden:

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymerpartikel werden vor der Messung gut durchmischt.

### Restmonomer (Residual Monomers)

Der Gehalt an Restmonomer der wasserabsorbierenden Polymerpartikel wird gemäß der von der EDANA (European Disposables and Nonwovens Association) empfohlenen Testmethode Nr. 410.2-05 "Residual monomers" bestimmt.

### Wassergehalt (Moisture Content)

Der Wassergehalt der wasserabsorbierenden Polymerpartikel wird gemäß der von der EDANA (European Disposables and Nonwovens Association) empfohlenen Testmethode Nr. 430.2-05 "Moisture content" bestimmt.

### Zentrifugenretentionskapazität (CRC Centrifuge Retention Capacity)

Die Zentrifugenretentionskapazität der wasserabsorbierenden Polymerpartikel wird gemäß der von der EDANA (European Disposables and Nonwovens Association) empfohlenen Testmethode Nr. 441.2-05 "Centrifuge retention capacity" bestimmt.

### Ausbeute

Zur Bestimmung der Ausbeute werden die aus dem Vertropferturm ausgeschleusten Polymerpartikel getrocknet und die Masse der getrockneten Polymerpartikel durch die Masse der eingesetzten Monomere dividiert. Wandbeläge im Vertropferturm werden nicht berücksichtigt.

Die EDANA-Testmethoden sind beispielsweise erhältlich bei der European Disposables and Nonwovens Association, Avenue Eugène Plasky 157, B-1030 Brüssel, Belgien.

### Beispiele:

### Beispiel 1 (Vergleichsversuch)

1,6 kg Acrylsäure und 14,4 kg Natriumacrylat (37,5 gew.-%ige Lösung in Wasser) wurden mit 12 g 3-fach ethoxiliertem Glycerintriacrylat (ca. 85 gew.-%ig) gemischt. Der Sauerstoffgehalt der Monomerlösung betrug 0,0006 Gew.-%. Die erhaltene Mischung wurde in einen erwärmten Vertropfungsturm vertropft (12m Höhe, 2m Breite, Gasgeschwindigkeit 0,1 m/s im Gleichstrom). Die Dosiergeschwindigkeit der Mischung betrug 16 kg/h. Die Vertropferplatte hatte 30 Bohrungen à 170 µpm. Die Initiatoren wurde vor dem Vertropfer über einen statischen Mischer in die Monomerlösung dosiert. Als Initiatoren wurden 580 g/h einer 5 gew.-%igen Lösung von 2,2'-Azobis[2-(2-imidazolin-2-yl)propan]dihydrochlorid in Wasser und 440 g/h einer 3 gew.-%igen Lösung von Natriumperoxodisulfat in Wasser verwendet. Die Heizleistung der Gasvorwärmung wurde so geregelt, dass die Gasausgangstemperatur im Vertropfungsturm konstant 130°C betrug.

Die Gasphase bestand aus einem Stickstoff/Sauerstoff-Gemisch. Der Sauerstoffgehalt der Gasphase betrug 0,1 Vol.-%.

Die erhaltenen Polymerpartikel hatten eine Zentrifugenretentionskapazität (CRC) von 31,7 g/g, einen Wassergehalt von 16,1 Gew.-% und einen Restmonomerengehalt von 0,188 Gew.-%.

Der Vertropfungsturm wurde 2 Stunden stationär betrieben. Die Ausbeute betrug 75,3 Gew.-%.

### Beispiel 2

Es wurde verfahren wie unter Beispiel 1. Der Sauerstoffgehalt wurde auf 1 Vol.-% angehoben.

Die erhaltenen Polymerpartikel hatten eine Zentrifugenretentionskapazität (CRC) von 30,5 g/g, einen Wassergehalt von 16,9 Gew.-% und einen Restmonomerengehalt von 0,1575 Gew.-%.

Der Vertropfungsturm wurde 2 Stunden stationär betrieben. Die Ausbeute betrug 82,8 Gew.-%.

### Beispiel 3

Es wurde verfahren wie unter Beispiel 1. Der Sauerstoffgehalt wurde auf 2,5 Vol.-% angehoben.

Die erhaltenen Polymerpartikel hatten eine Zentrifugenretentionskapazität (CRC) von 32,6 g/g, einen Wassergehalt von 16,2 Gew.-% und einen Restmonomerengehalt von 0,2225 Gew.-%.

Der Vertropfungsturm wurde 2 Stunden stationär betrieben. Die Ausbeute betrug 81,7 Gew.-%.

### Beispiel 4

Es wurde verfahren wie unter Beispiel 1. Der Sauerstoffgehalt wurde auf 5 Vol.-% angehoben.

Die erhaltenen Polymerpartikel hatten eine Zentrifugenretentionskapazität (CRC) von 32,7 g/g, einen Wassergehalt von 16,3 Gew.-% und einen Restmonomerengehalt von 0,141 Gew.-%.

Der Vertropfungsturm wurde 2 Stunden stationär betrieben. Die Ausbeute betrug 80,5 Gew.-%.

## Patentansprüche

1. Verfahren zur Herstellung wasserabsorbierender Polymerpartikel durch Polymerisation von Tropfen einer Monomerlösung, enthaltend
a) mindestens ein ethylenisch ungesättigtes Monomer,
b) wahlweise einen Vernetzer,
c) mindestens einen Initiator und
d) Wasser,
in einer umgebenden Gasphase in einem Reaktionsraum, **dadurch gekennzeichnet, dass** die Monomerlösung mindestens 0,0002 Gew.-% Sauerstoff enthält und der Sauerstoffgehalt der Gasphase mindestens 0,5 Vol.-% beträgt.

2. Verfahren gemäß Anspruch 1, **dadurch gekennzeichnet, dass** die Monomerlösung mindestens 0,0004 Gew.-% Sauerstoff enthält.

3. Verfahren gemäß Anspruch 1 oder 2, **dadurch gekennzeichnet, dass** der Sauerstoffgehalt der Gasphase mindestens 1 Vol.-% beträgt.

4. Verfahren gemäß einem der Ansprüche 1 bis 3, **dadurch gekennzeichnet, dass** der Sauerstoffgehalt der Gasphase höchstens 10 Vol.-% beträgt.

5. Verfahren gemäß einem der Ansprüche 1 bis 4, **dadurch gekennzeichnet, dass** der Stickstoffgehalt der Gasphase mindestens 80 Vol.-% beträgt.

6. Verfahren gemäß einem der Ansprüche 1 bis 5, **dadurch gekennzeichnet, dass** die Gasphase den Reaktionsraum mit einer Geschwindigkeit von mindestens 0,01 m/s durchströmt.

7. Verfahren gemäß Anspruch 6, **dadurch gekennzeichnet, dass** die Gaseintrittstemperatur mindestens 160°C beträgt.

8. Verfahren gemäß Anspruch 6 oder 7, **dadurch gekennzeichnet, dass** die Gasaustrittstemperatur höchstens 180°C beträgt.

9. Verfahren gemäß einem der Ansprüche 1 bis 8, **dadurch gekennzeichnet, dass** Monomer a) zu mindestens 50 mol-% Acrylsäure ist.

10. Verfahren gemäß Anspruch 9, **dadurch gekennzeichnet, dass** die Acrylsäure zu mindestens 25 mol-% neutralisiert ist.

11. Verfahren gemäß einem der Ansprüche 1 bis 10, **dadurch gekennzeichnet, dass** die Monomerlösung mindestens 0,01 Gew.-% Vernetzer b), bezogen auf Monomer a) enthält.

12. Verfahren gemäß einem der Ansprüche 1 bis 11, **dadurch gekennzeichnet, dass** die Tropfen einen mittleren Durchmesser von mindestens 200 µm aufweisen.

## Claims

1. A process for producing water-absorbing polymer particles by polymerizing droplets of a monomer solution comprising
a) at least one ethylenically unsaturated monomer,
b) optionally a crosslinker,
c) at least one initiator and
d) water,
in a surrounding gas phase in a reaction chamber, wherein the monomer solution comprises at least 0.0002% by weight of oxygen and the oxygen content of the gas phase is at least 0.5% by volume.

2. The process according to claim 1, wherein the monomer solution comprises at least 0.0004% by weight of oxygen.

3. The process according to claim 1 or 2, wherein the oxygen content of the gas phase is at least 1% by volume.

4. The process according to any of claims 1 to 3, wherein the oxygen content of the gas phase is at most 10% by volume.

5. The process according to any of claims 1 to 4, herein the nitrogen content of the gas phase is at least 80% by volume.

6. The prowess according to any of claims 1 to 5, therein the gas phrase flows through the redaction chamber at a rate of at leash 0.01 m/s.

7. The process according to claim 6, wherein the gas entrance temperature is at least 160°C.

8. The process according to claim 6 or 7, therein the gas exist temperature is at most 180°C.

9. The process according to any of claims 1 to 8, wherein monomer a) is acrylic acid to an extent of at least 50 mol%.

10. The process according to claim 9, wherein the acrylic acid has been neutralize to an extent of at least 25 mol%.

11. The process according to any of claim 1 to 10, wherein the monomer solution comprised at least 0.01% by weight of crosslinker b), based on monomer a) .

12. The prowess according to any of claims 1 to 11, wherein the droplets have a mean diameter of at least 200 µm.

## Revendications

1. Procédé pour la préparation de particules polymères absorbant l'eau par polymérisation de gouttes d'une solution de monomères, contenant
a) au moins un monomère éthyléniquement insaturé,
b) au choix un réticulant,
c) au moins un initiateur et
d) de l'eau,
dans une phase gazeuse environnante dans un espace de réaction, **caractérisé en ce que** la solution de monomères contient au moins 0,0002% en poids d'oxygène et la teneur en oxygène de à phase gazeuse est d'au moins 0,5% en volume.

2. Procédé selon la revendication 1, **caractérisé en ce que** la solution de monomères contient au moins 0,0004% en poids d'oxygène.

3. Procédé selon la revendication 1 ou 2, **caractérisé en ce que** la teneur en oxygène de la phase gazeuse est d'au moins 1% en volume.

4. Procédé selon l'une quelconque des revendications 1 à 3, **caractérisé en ce que** la teneur en oxygène de la phase gazeuse est d'au plus 10% en volume.

5. Procédé selon l'une quelconque des revendications 1 à 4, **caractérisé en ce que** la teneur en azote de la phase gazeuse est d'au moins 80% en volume.

6. Procédé selon l'une quelconque des revendications 1 à 5, **caractérisé en ce que** la phase gazeuse s'écoule dans l'espace de réaction à une vitesse d'au moins 0,01° m/s.

7. Procédé selon la revendication 6, **caractérisé en ce que** la température d'entrée du gaz est d'au moins 160°C.

8. Procédé selon la revendication 6 ou 7, **caractérisé en ce que** la température de sortie du gaz est d'au plus 180°C.

9. Procédé selon l'une quelconque des revendications 1 à 8, **caractérise en ce que** le monomère a) est, à raison d'au moins 50% en mole, de l'acide acrylique.

10. Procédé selon la revendication 9, **caractérisé en ce que** l'acide acrylique est neutralisé à raison d'au moins 25% en mole.

11. Procédé selon l'une quelconque des revendications 1 à 10, **caractérisé en ce que** la solution de monomères contient au moins 0,01% en poids de réticulant b), par rapport au monomère a).

12. Procédé selon l'une quelconque des revendications 1 à 11, **caractérisé en ce que** les gouttes présentent un diamètre moyen d'au moins 200 µm.
